# EUROPEAN PATENT SPECIFICATION

(11) **EP 2 469 894 B1**
(45) Date of publication and mention of the grant of the patent: **08.07.2015**
(21) Application number: 10818341.9
(22) Date of filing: 28.07.2010
(51) Int. Cl.: H04W 4/22, H04W 64/00, H04W 76/02, H04L 29/12, H04W 4/02

(54) **METHOD AND SYSTEM FOR IMPLEMENTING EMERGENCY LOCATION**
VERFAHREN UND SYSTEM ZUR EINRICHTUNG EINES NOTFALLSTANDORTS
PROCÉDÉ ET SYSTÈME POUR RÉALISER UNE LOCALISATION D'URGENCE

(30) Priority: 24.09.2009 CN 200910093509
(43) Date of publication of application: 27.06.2012
(73) Proprietor: ZTE Corporation, Shenzhen, Guangdong 518057 (CN)
(72) Inventor: LI, Zhijun, Shenzhen Guangdong 518057 (CN); LI, Hui, Shenzhen Guangdong 518057 (CN)
(74) Representative: Manitz, Finsterwald & Partner GbR
(86) International application number: PCT/CN2010/075527
(87) International publication number: WO 2011/035647

(56) References cited:
- WO-A1-2007/043753
- WO-A1-2007/043772
- WO-A1-2009/097870
- WO-A2-2007/035736
- CN-A- 1 791 266
- CN-A- 101 227 710
- CN-A- 101 288 330
- FEI YANG ET AL: "SUPL 2_0 Emergency Service SUPL POS Over SIP ; OMA-LOC-2007-0062-INP_SUPL_2_0_Emergency_S ervice_SUPL_POS_Over_SIP", OMA-LOC-2007-0062-INP_SUPL_2_0_EMERGENCY_S ERVICE_SUPL_POS_OVER_SIP, OPEN MOBILE ALLIANCE (OMA), 4330 LA JOLLA VILLAGE DR., SUITE 110 SAN DIEGO, CA 92122 ; USA , 20 March 2007 (2007-03-20), pages 1-7, XP064088518, Retrieved from the Internet: URL:ftp/Public_documents/LOC/2007/ [retrieved on 2007-03-26]
- STEPHEN EDGE ET AL: "SUPL3_0_RD_support_of_SI_emergency_call_l ocation ; OMA-LOC-2009-0116-CR_SUPL3_0_RD_support_of _SI_emergency_call_location", OMA-LOC-2009-0116-CR_SUPL3_0_RD_SUPPORT_OF _SI_EMERGENCY_CALL_LOCATION, OPEN MOBILE ALLIANCE (OMA), 4330 LA JOLLA VILLAGE DR., SUITE 110 SAN DIEGO, CA 92122 ; USA , 17 April 2009 (2009-04-17), pages 1-2, XP064089989, Retrieved from the Internet: URL:ftp/Public_documents/LOC/2009/ [retrieved on 2009-04-17]
- ZTE CORPORATION: "Emergency Location Requirement in SUPL3.0 ; OMA-LOC-2009-0213-INP_INP_RD_SUPL3_0_Emerg ency_location_Support", OMA-LOC-2009-0213-INP_INP_RD_SUPL3_0_EMERG ENCY_LOCATION_SUPPORT, OPEN MOBILE ALLIANCE (OMA), 4330 LA JOLLA VILLAGE DR., SUITE 110 SAN DIEGO, CA 92122 ; USA , 13 August 2009 (2009-08-13), pages 1-4, XP064090151, Retrieved from the Internet: URL:ftp/Public_documents/LOC/2009/ [retrieved on 2009-08-19]
- Lee Hunter: "Emergency location for emergency call", , 1 February 2010 (2010-02-01), XP055026935, Retrieved from the Internet: URL:http://member.openmobilealliance.org/f tp/Public_documents/LOC/2010/OMA-LOC-2010- 0032-INP_SUPL3_0_emergency_location_for_em ergency_call.zip [retrieved on 2012-05-11]

## Description

### Technical Field

The present invention relates to an emergency call technology, and more particularly, to a method and system for implementing emergency location when a User Equipment (UE) having Security User Plane Location (SUPL) ability initiates an emergency call.

### Background of the Related Art

IP Multimedia Core Network Subsystem (IMS), which is a core of the new generation communication network, uses a Session Initiation Protocol (SIP) system. The SIP stipulates that communication is independent of access, and has abilities of separating multimedia service control function and bearer function, separating call and session, separating application and service, separating service and network, and merging mobile network service and internet network service, etc.

Because the IMS is independent of access, emergency calls under the IMS can be established in the General Packet Radio Service (GPRS) network and System Architecture Evolution (SAE) network to provide the unified emergency call control.

In order to implement emergency calls under the IMS, location services are indispensable. For example, the emergency calls are required to be routed to a suitable police station according to a position of a UE, and the police station needs to know the current location information of the UE for the purpose of safety and rescue.

At present, there are two commonly used location technologies: the control plane location service (LCS) technology defined by the 3rd Generation Partnership Project (3GPP) organization, and the security user plane location (SUPL) technology defined by the OMA organization. The SUPL technology has been widely used as its architecture is simple to implement and it is independent of a core network.

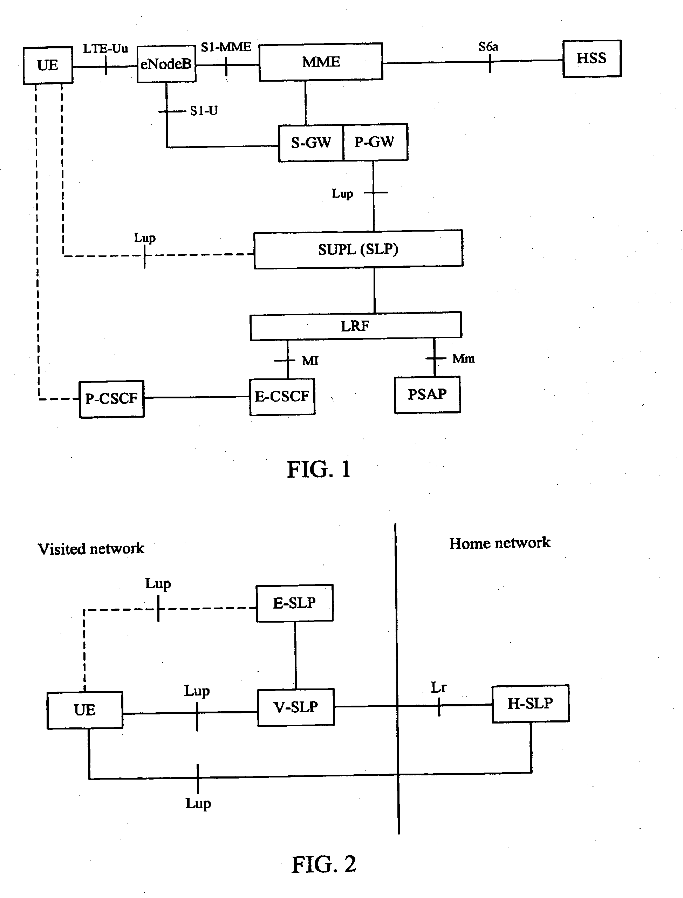

FIG. 1 is a schematic diagram of a network architecture in which a UE connects an emergency call of an IMS through a SAE network, in which solid lines represent signaling, and dashed lines represent IP channels of a user. As shown in FIG.1, the network architecture includes network elements of the SAE network, network elements for location services, and portions of emergency services of the IMS.

The network elements of the SAE network are used to provide the underlying bearer management and mobility management, including enhanced wireless eNodeB, Mobility Management Entity (MME), and user plane data route processing (SAE GW). eNodeB, which is a entity for controlling main air resources in the next generation wireless access network, can provide higher uplink and downlink rate, lower transmission delay and more reliable wireless transmission. The MME takes charge of managing and storing context of the UE, such as an identifier of the UE/user, mobility management state, user safety parameter, etc., allocating a temporary identifier to the user, and authenticating the user when the UE resides in a tracking area or the network. SAE gateways (GW) (i.e., user plane function entities) can be divided into serving gateways (S-GW) and packet data network gateways (PDN-SW, P-GW for short). An S-GW is a mobile anchor point between a SAE system and a traditional 3GPP system, or between a SAE system and an Evolved Universal Terrestrial Radio Access Network (E-UTRAN). A P-GW, which is a boundary gateway between a SAE network and a packet data network (PDN), takes charge of functions, such as access of the PDN, forwarding of data between the SAE network and the PDN, etc.

A core network element of security user plane location (SUPL) services is a SUPL Platform (SLP). Furthermore, a UE having a SUPL ability is called as a SUPL Enabled Terminal (SET), i.e., actually a UE integrating a location module (such as A-GPS).

The portions of the emergency services of the IMS are used to control and process emergency call sessions. The portions of the emergency services of the IMS include a home subscriber server (HSS), emergency call session control function (E-CSCF), location request function (LRF) and public safety access point (PSAP). The HSS managing user subscription data is located in a home network. The E-CSCF is a core network element controlling an emergency call process and is located in a visited network. The PSAP is actually a police station. The LPF, which is a logic function entity, provides location information of the UE for the E-CSCF and PSAP. The LRF can be deployed independently, or is included in other location servers, for example, integrated into the SLP.

Usually, a UE having the SUPL ability configures a SLP of the home network, i.e., H-SLP, in the terminal itself. When the UE is in a non-roaming state, the UE can implement location through interaction with the H-SLP; after roaming to a visited network, the UE can complete location in conjunction with the H-SLP and the SLP of the visited network, i.e., V-SLP. Additionally, because of the particularity of the emergency call, it must be processed in the visited network, and a processing logic for the emergency call may be different from that for a general call. Therefore, there is a SLP providing location services for emergency calls, i.e., an emergency SLP (E-SLP). FIG. 2 is a schematic diagram of interaction between a UE having the SUPL ability and a location platform in a roaming scenario.

At present, when a UE having the SUPL ability, i.e., a SET, initiates an emergency call, location used for the emergency call is usually started at a network side, that is, a network initiated location request (NI-LR) is used.

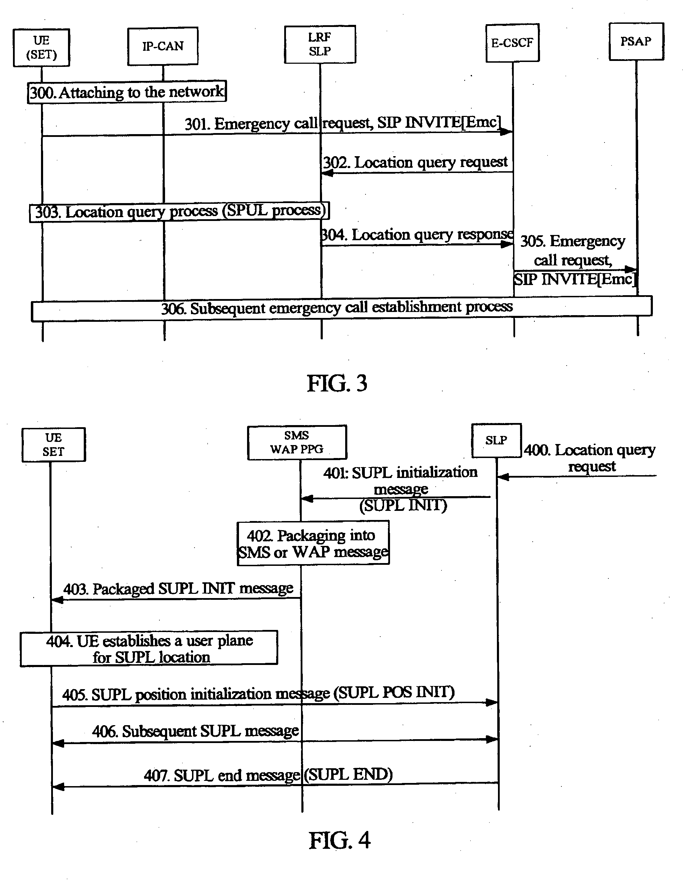

FIG. 3 is a flowchart of a procedure of initiating location at the network side using SUPL as a location service technology under LTE/EPS access when a UE initiates an emergency call, which, as shown in FIG. 3, comprises the following steps.

In step 300, the UE attaches to an IP access network (IP CAN). IP CAN refers to an access layer comprising eNodeBs and MMEs.

In this step, in the process in which the UE attaches to the network, an IP address is allocated to the UE. In addition, the UE finds an entrance of an IMS domain, i.e., an address of a P-CSCF, through the attaching process.

In step 301, the UE initiates an emergency call request, i.e., initiates a SIP invite (INVITE) carrying an emergency identifier (Emc) to the P-CSCF. The call request is routed to the E-CSCF.

In step 302, after receiving the emergency call request of the UE, the E-CSCF initiates a location query request to a LRF to request location information of the UE from the LRF.

In step 303, after receiving the location query request of the E-CSCF, the LRF initiates a location query request to a SLP, the SLP establishes a SUPL connection with the UE, and obtains the detailed location information from the UE (SET).

In step 304, after obtaining the location information of the UE, the LRF determines a suitable PSAP based on the location information of the UE, sends a position query response to the E-CSCF, and returns the location information of the UE and information of the PSAP.

In step 305, after obtaining the location information of the UE and the information of the PSAP, the E-CSCF forwards an emergency call request initiated by the UE to the PSAP, i.e., forwards the SIP invite carrying the emergency identifier to the PSAP.

In step 306, the subsequent procedure is a process of establishing an emergency call between the PSAP and the UE.

In the procedure shown in FIG. 3, after the emergency call request of the UE is received at the network side (E-CSCF, LRF), a location process initiated by the network side is initiated, i.e., step 302 and step 303 are executed. Step 303 is a summarized process. Specifically, a SUPL procedure is established between the SLP and the UE using a method shown in FIG. 4 or 5.

FIG.4 is a flowchart of a procedure in which a SLP establishes a SUPL process with a UE after receiving a location query request. As shown in FIG. 4, the SLP notifies the UE to initiate the SUPL process through a short message gateway (SMS GW), WAP gateway (WAP PPG), etc. The procedure specifically comprises the following steps.

In steps 400 to 401, the SLP receives a location query request sent by another network entity, and sends a SUPL initiation (SUPL INIT) message to a short message center, WAP gateway, etc. A SUPL session ID, a location mode supported by the SLP, and an operation mode of the SLP are contained in the massage.

In steps 420 to 403, the short message center (or WAP gateway) packages the SUPL INIT message into a short message (or a WAP message) to send to the UE.

In step 404, after receiving the packaged SUPL INIT message, the UE actively initiates a use plane bearer establishment process for location to the network. Moreover, a TLS security link tunnel is established between the UE and the SLP.

In step 405, the UE sends a SUPL position initiation (SUPL POS INIT) message to the SLP. The SUPL session ID and SUPL ability of the UE are contained in the message.

In step 406, the subsequent location messages are interacted.

In step 407, the location procedure ends, and the SLP sends a SUPL end message to the UE.

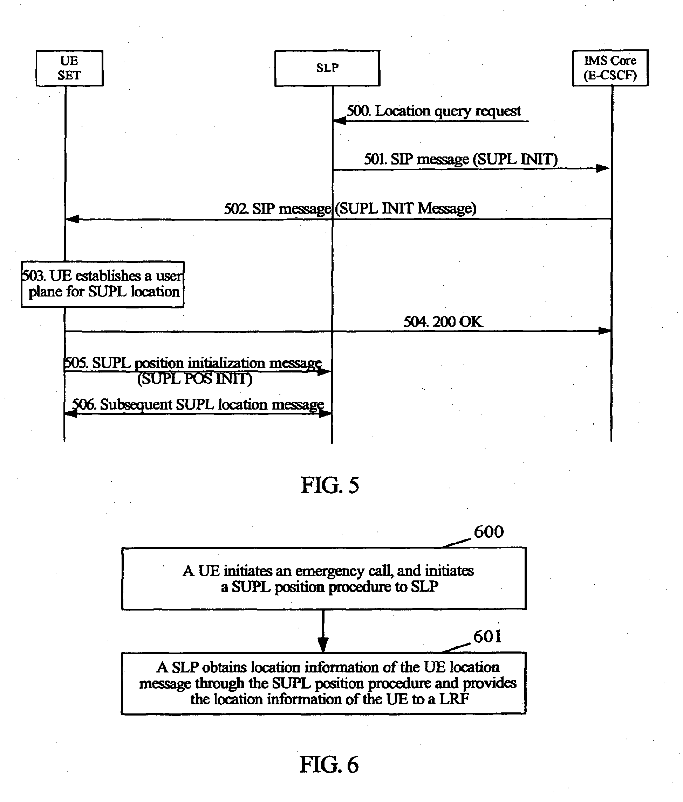

Or after receiving the location query request, the SLP initiates a location process using a procedure shown in FIG. 5. FIG. 5 is flowchart of another procedure in which a SLP establishes a SUPL process with a UE after receiving a location query request. As shown in FIG. 5, the SLP sends a SUPL INIT message to the UE through a core network element of an IMS. The procedure specifically comprises the following steps.

In steps 500 to 501, the SLP receives a location query request sent by another network entity, and sends a SUPL initiation (SUPL INIT) message to the core network element of the IMS. Usually, the message is protected in a SIP message.

In step 502, the core network element of the IMS forwards the SIP Message containing the SUPL INIT message to the UE.

In step 503, after receiving the SUPL INIT message contained in the SIP Message, the UE actively initiates a use plane bearer establishment process for location to the network. Moreover, a TLS security link tunnel is established between the UE and the SLP.

In step 504, the UE return a 200 OK response to the core network element of the IMS.

In step 505, the UE sends a SUPL position initiation (SUPL POS INIT) message to the SLP. The SUPL session ID and SUPL ability of the UE are contained in the message.

In step 506, the subsequent location messages are interacted. After the location ends, the SLP sends a SUPL end message to the UE to end the location process.

At present, a method in which a location procedure can be initiated at the network side to provide location services required for an emergency call when a UE initiates the emergency call can be implemented through the procedure shown in FIGs. 3, 4 and 5.

Some problems may exist in the network initiated location request (NI-LR) shown in FIGS. 3, 4 and 5, and may affect the emergency call, which will be described below.
1) When the UE has no effective International Mobile Subscriber Identifier (IMSI) or card, if the SUPL initiation process shown in FIG. 4 is used, the short message gateway and WAP gateway cannot provide services for the UE.
2) If the SUPL initiation process shown in FIG. 5 is used, the SLP is required to support the SIP protocol. It is too complicated for the SLP to support the SIP protocol for a simple SIP Message.
3) When the SLP initiates a SUPL INIT message to the UE, it does not ensure that the UE has the SUPL capability, i.e., it does not ensure that the UE is a qualified SET terminal. Thus, it is possible that the correct response to the SUPL INIT message sent by the SLP can not be obtained, resulting in failure or delay of the emergency call process.

For the reasons described above, it is necessary to propose a suitable location method to serve an emergency call, especially an emergency call in the case of no valid IMSI or card.

In order to solve the above problems, the present invention provides a method for initiating an emergency location procedure (MO-LR) actively when a UE initiates an emergency call so as to support the emergency call, and effectively solve the existing problems.

The features of the preamble of the independent claims are known from the document "SUPL 2_0 Emergency Service SUPL POS Over SIP; OMA-LOC-2007-0062-INP_SUPL_ 2_0_Emergency_Service_SUPL_POS_Over_SIP" of FEI YANG ET AL, 20 March 2007, XP064088518. Related technologies are also known from WO 2007/043753 A1; WO 2009/097870 A1; WO 2007/043772 A1; "SUPL3_0_RD_support_of_SI_emergency_call_ location; OMA-LOC-2009-0116-CR_SUPL3_0_RD_support_of_SI_ emergency_call_location" of STEPHEN EDGE ET AL, 17 April 2009, XP064089989; and "Emergency Location Requirement in SUPL3.0; OMA-LOC-2009-0213-INP_INP_RD_SUPL3_0_Emergency_ location_Support" of ZTE CORPORATION, 13 August 2009, XP064090151; and "Emergency location for emergency call" of Lee Hunter, 1 February 2010, XP055026935.

### Content of the Invention

In view of this, a main object of the present invention is to provide a method and a system for implementing emergency location as defined in the independent claims, so as to implement the location simply and reasonably to ensure completion of the emergency call process.

In order to achieve the above object, the technical scheme of the present invention is implemented as follow.

A method for implementing emergency location comprises:
a User Equipment (UE) initiating an emergency call, and initiating a SUPL position procedure to a security user plane location platform (SLP); and
the SLP obtaining location information of the UE through the SUPL position procedure, and providing the location information of the UE to a location request function (LRF).

The UE initiating the SUPL position procedure to the SLP comprises: after initiating an emergency call request, the UE immediately initiating a location start request to the SLP; or before initiating the emergency call request, the UE firstly initiating a location start request carrying an emergency identifier to the SLP.

In the method, the SLP initiating the location start request specifically comprises: the UE sending a SUPL start message carrying the emergency identifier to the SLP; and after receiving the SUPL start message from the UE, the SLP returning a SUPL response message to the UE.

In the method, the SLP obtaining the location information of the UE through the SUPL position procedure comprises: the UE initiating a SUPL initialization message to the SLP, and the SLP obtaining the location information of the UE from the UE after a SUPL connection between the UE and the SLP is established.

In the method, the SLP providing the location information of the UE to the LRF comprises: after receiving the emergency call request from the UE, an emergency call session control function (E-CSCF) sends a location query request to the LRF; and the LRF querying the location information of the UE from the SLP to return to the E-CSCF.

In the method, before the LRF queries the location information of the UE from the SLP, the method further comprises: the SLP associating the SUPL position procedure with the location query request, and when the SLP receives the location query request initiated by the LRF but the SUPL position procedure initiated by the UE has not ended yet, the SLP providing the location information of the UE to the LRF after the SUPL position procedure ends; or when the LRF queries the location information of the UE from the SLP, if the SUPL position procedure has ended, the SLP directly providing the obtained location information of the UE to the LRF.

In the method, the association information includes an identifier of the UE, and/or an IP address of the UE.

The method further comprises the UE obtaining an address of the SLP of a visited network from a network, and specifically comprises: the UE sending an attach request to an access network; upon success of the attachment, the access network returning a attach response carrying a domain name or an IP address of the SLP of the network; if the UE obtains the domain name of the SLP in the attach response, the UE requesting a DNS server to parse the domain name; the DNS server returns the parsed IP address of the SLP to the UE.

The method further comprises the UE obtaining an address of the SLP of a visited network from a network, and specifically comprises: the UE sending an attach request to an access network; upon success of attachment, the network allocating an IP address to the UE, and returning a attach response carrying an address of a DHCP server; the UE sending a DHCP query request to the DHCP server, the DHCP server returning a DHCP query response carrying a domain name or an IP address of the SLP of the network; or the DHCP server returning the domain name or the IP address of the SLP of the network to the UE through a DHCP broadcast message; if the DHCP server returns the domain name of the SLP, the UE requesting the DNCP server to parse the domain name; the DNS server returning the parsed IP address of the SLP to the UE.

A system for implementing emergency location comprises at least a UE, a SLP and a LRF, wherein the UE is configured to initiate an emergency call, and initiate a SUPL position procedure to the SLP; the SLP is configured to obtain location information of the UE through the SUPL position procedure, and provide the location information of the UE to the LRF.

The system further comprises an E-CSCF configured to receive an emergency call request sent by the UE, send a location query request to the LRF, and obtain the location information of the UE and a suitable PSAP. After obtaining the PSAP, the E-CSCF routes the emergency call sent by the UE to the PSAP. The LRF is further configured to query the location information of the UE from the SLP, determine the suitable PSAP based on the obtained location information, and return a position query response carrying the location information of the UE and information of the PSAP to the E-CSCF.

In the system, the UE is further configured to send a SUPL start message carrying an emergency identifier to the SLP to initiate the SUPL position procedure, and initiate a SUPL initialization message to the SLP to establish a SUPL connection between the UE and the SLP; the SLP is further configured to return a SUPL response message to the UE after receiving the SUPL start message from the UE, and obtain the location message from the UE after the SUPL connection between the UE and the SLP is established.

It can be seen from the technical scheme provided by the present invention that the UE initiates the SUPL position procedure to the SLP while initiating the emergency call; the SLP obtains the location information of the UE through the SUPL position procedure, and provides the location information of the UE to the LRF. Through the method in accordance with the present invention, the SUPL position procedure is initiated by the UE initiating the emergency call and the SLP is not required to support the SLP protocol, thereby simplifying the design of the SLP. In addition, it is clear to the UE that the UE is a qualified SET, so the location request initiated by the UE can certainly be responded correctly, thereby ensuring successful implementation of the emergency call process.

### Brief Description of Drawings

FIG. 1 is a schematic diagram of a network architecture in which a UE connects an emergency call of an IMS through a SAE network;
FIG. 2 is a schematic diagram of interaction between a UE having the SUPL ability and a location platform in a roaming scenario;
FIG. 3 is a flowchart of a procedure of initiating location at the network side using SUPL as a location service technology under LTE/EPS access when a UE initiates an emergency call;
FIG. 4 is a flowchart of a procedure in which a SLP establishes a SUPL process with a UE after receiving a location query request;
FIG. 5 is flowchart of another procedure in which a SLP establishes a SUPL process with a UE after receiving a location query request;
FIG. 6 is a flowchart of a method for implementing emergency location in accordance with the present invention;

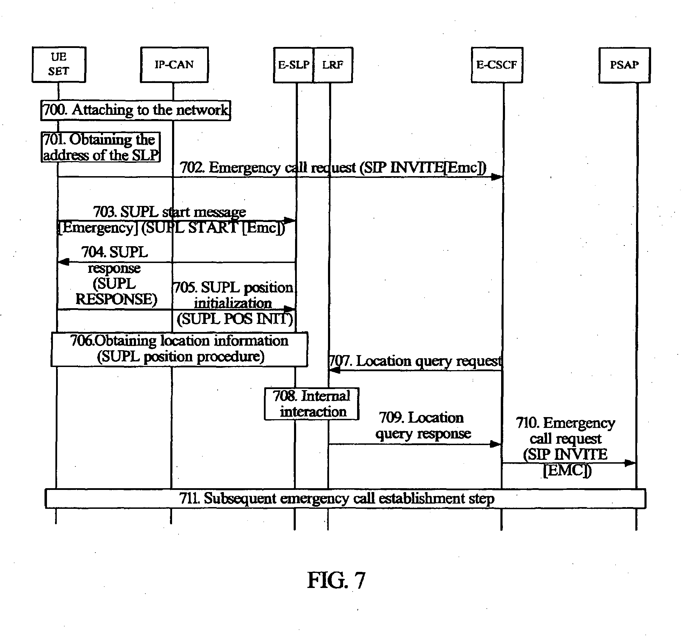

FIG. 7 is a flowchart of a procedure in which a UE initiating an emergency call implements location in accordance with an embodiment of the present invention;

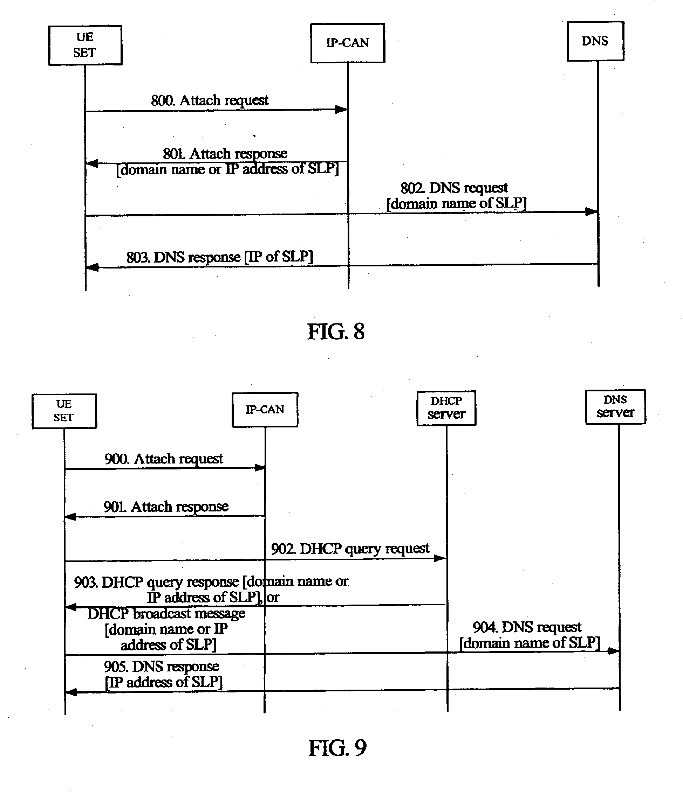

FIG. 8 is a flowchart of a procedure in which the UE finds the SLP in the embodiment shown in FIG. 7; and
FIG. 9 is a flowchart of another procedure in which the UE finds the SLP in the embodiment shown in FIG. 7.

### Preferred Embodiments of the Present Invention

FIG. 6 is a flowchart of a method for implementing emergency location in accordance with the present invention. As shown in FIG. 6, the method comprises the following steps.

In step 600, a UE initiates an emergency call, and initiates a SUPL position procedure to a SLP.

The UE initiates an emergency call request, i.e., initiates a SIP invite message carrying an emergency identifier, and the emergency call request is routed to an E-CSCF; meanwhile, the UE sends a SUPL initialization message to the SLP, i.e., sends a SUPL start message carrying the emergency identifier to the SLP to initiate the SUPL position procedure. Before attempting the emergency call request, usually an appropriate IP connection for emergency usage shall be established by the UE.

It should be noted that the UE can immediately initiate a location start request to the SLP after initiating an emergency call request (SIP INVITE) to an IMS;

Or the UE can firstly initiate the location start request to the SLP before initiating the emergency call request (SIP INVITE) to the IMS.

In step 601, the SLP obtains location information of the UE through the SUPL position procedure, and provides the location information of the UE to a LRF.

On the one hand, after receiving the SUPL start message from the UE, the SLP returns a SUPL response message to the UE. In this interaction process, the SUPL capabilities are exchanged between the UE and the SLP, and important parameters, such as the specific location method, etc., are negotiated. The UE initiates a location initialization message to the SLP, and sends a SUPL POS INIT message. After a SUPL connection between the UE and the SLP is established, the SLP obtains the location information from the UE through the subsequent SUPL position procedure.

On the other hand, after receiving the emergency call request sent by the UE, the E-CSCF sends a location query request to the LRF to request the LRF to return the location information of the UE, and selects a suitable PSAP according to the location information of the UE. The LRF queries the location information of the UE from the SLP, and determines the suitable PSAP based on the obtained location information, and returns a position query response carrying the location information of the UE and information of the PSAP to the E-CSCF. After obtaining the PSAP, the E-CSCF routes the emergency call request initiated by the UE to the PSAP.

In the subsequent process, the emergency call session between PSAP and the UE is established.

For the method in accordance with the present invention, a system for implementing emergency location is provided comprising at least a UE, a SLP and a LRF.

The UE is configured to initiate an emergency call, and initiate a SUPL position procedure to the SLP.

The SLP is configured to obtain location information of the UE through the SUPL position procedure, and provide the location information of the UE to the LRF.

The system further comprises an E-CSCF configured to receive an emergency call request sent by the UE, send a location query request to the LRF, and obtain the location information of the UE and a suitable PSAP. After obtaining the PSAP, the E-CSCF routes the emergency call sent by the UE to the PSAP.

The LRF is further configured to query the location information of the UE from the SLP, determine the suitable PSAP based on the obtained location information, and return a position query response carrying the location information of the UE and information of the PSAP to the E-CSCF.

The UE is further configured to send a SUPL initialization message to the SLP, i.e., to send a SUPL start message carrying an emergency identifier to the SLP to initiate the SUPL position procedure. The UE sends the SUPL initialization message to the SLP to establish a SUPL connection between the UE and the SLP.

The SLP is further configured to return a SUPL response message to the UE after receiving the SUPL start message from the UE. In this interaction process, the SUPL capabilities are exchanged between the UE and the SLP, and important parameters, such as the specific location method, etc., are negotiated. After the SUPL connection between the UE and the SLP is established, the SLP obtains the location information from the UE through the subsequent SUPL position procedure.

FIG. 7 is a flowchart of a procedure in which a UE initiating an emergency call implements location in accordance with an embodiment of the present invention. As shown in FIG. 7, the procedure for implementing the emergency location using a SUPL position procedure (MO-LR) initiated by the UE when the UE initiates the emergency call comprises the following steps.

In step 700, the UE attaches to an IP access network.

The UE having SUPL ability is a SET. The IP access network refers to a SAE network comprising important entities, such as eNodeBs, MMEs, etc. After attaching to the IP access network, the UE is allocated a suitable IP address, and obtains necessary network information, such as dynamic host configuration protocol (DHCP) server address, domain name server address, etc., from the network.

In step 701, the UE obtains an address of a SLP of a visited network from the network.

The UE can obtain the address of the SLP located in the visited network by constructing a suitable domain name and requesting a DNS server to parse it. If the UE hopes to find a SLP for an emergency call located in the visited network, i.e., E-SLP, the UE can construct a domain name like "E-SLP.XXX.XXX.XXX" or the like, where XXX may be any effective character string. For example, when the visited network is a 3GPP network, "E-SLP.MNC.MCC.PUB.3GPPNETWORK.ORG" can be constructed, where MNC is a network number of the visited network to which the UE accesses, MCC is a country number of the access network of the UE, and 3GPPNETWORK represents the 3GPP network that the UE currently access to.

Alternatively, for a UE with valid SIM card / IMSI, the UE can get the E-SLP located in visited network from its home network SLP, i.e. H-SLP whose address is usually configured on the UE locally. The UE can interact with its H-SLP and provide the visited network identifier (e.g. MCC+MNC), and hence the H-SLP provides the appropriate E-SLP associated with visited according to local policy, e.g., roaming agreement.

The UE accesses to an EPS network through steps 700 and 701, is allocated the IP address, and obtains the suitable address of the SLP such that the UE has the condition for emergency call.

In step 702, the UE initiates an emergency call request, initiates a SIP invite message carrying an emergency identifier. The emergency call request is routed to an E-CSCF.

In step 703, the UE initiates an emergency call request while sending a SUPL initialization message to the SLP, and then sends a SUPL start message carrying the emergency identifier to the SLP.

In step 704, after receiving the SUPL start message from the UE, the SLP returns a SUPL response message to the UE.

In the interaction between step 703 and step 704, the SUPL capabilities are exchanged between the UE and the SLP, and important parameters, such as a special location method, are negotiated.

In step 705, the UE initiates a SUPL position initialization (SUPL POS INIT) message to the SLP.

In step 706, after a SUPL connection between the UE and the SLP is established in steps 703 to 705, the SLP obtains location information of the UE from the UE through the subsequent SUPL position procedure.

In step 707, after the UE initiates the emergency call request in step 702, the E-CSCF sends a location query request to a LRF after receiving the emergency call request sent by the UE.

The location query request is used for asking the LRF to return the location information of the UE, and determine a suitable PSAP based on the location of the UE.

In step 708, the LRF queries the location information of the UE from the SLP.

In step 709, after obtaining the location information of the UE from the SLP, the LRF determines the suitable PSAP based on the location information, and returns a location query response carrying the location information of the UE and information of the PSAP to the E-CSCF.

In step 710, after obtaining the PSAP, the E-CSCF routes the emergency call request sent by the UE to the PSAP.

In step 711, in the subsequent procedure, the emergency call between the PSAP and the UE is established.

In FIG. 7, step 703 is executed without waiting for a return response in step 702, that is, step 703 and step 702 are executed concurrently. Since the condition of executing step 703 is that the UE knows that it will initiate an emergency call, step 703 can be initiated prior to or at the same time as or after step 702.

During execution of steps 703 to 706, step 703 may have been initiated, and at this point, the SLP should associate a location request in step 707 with a MO-LR location process which is established in steps 703 to 706. That is, the SLP can associate the location query request initiated by the LRF with the MO-LR emergency location process initiated by the UE based on association information, such as the identifier of the UE and/or the IP address of the UE, such that the SLP can provide the location information of the UE obtained in the MO-LR emergency location process to the LRF.

Because the SLP needs to associate the location query request initiated by the LRF with the emergency SUPL location procedure (i.e. MO-LR, Mobile Originated Location Request) initiated by the UE, when the SLP receives the location query request initiated by the LRF and the MO-LR emergency location process initiated by the UE has not ended yet, the SLP should temporarily suppress the response to step 707 and waits for the end of step 706 to respond to step 707. A simple suppression method is that after receiving the step 707, the SLP firstly waits for the end of the MO-LR emergency location process initiated by the UE, and then processes the response to step 707.

Or when step 707 is executed, the SLP may have obtained the location information of the UE from the execution of steps 703 to 706, so the SLP can directly provide the obtained location information of the UE to the LRF.

In the process shown in FIG. 7, in order to ensure the execution of step 703, the UE firstly needs to obtain information of the SLP of the visited network by the following method:
1) For a UE having a valid IMSI, the UE obtains the V-SLP of the visited network through the H-SLP in the UE's home network. Usually the H-SLP is statically configured on the UE.
2) The UE finds the SLP of the visited network by constructing a corresponding domain name.

The two methods described above are typical implementation methods for finding an E-SLP of a visited network. There are problems in the two methods for a subscriber without valid IMSI or subscriber identity module (SIM) card such that the UE can not find the SLP of the visited network. If the UE has no valid IMSI or no SIM card, the UE can not obtain the address of the H-SLP of the home network. The H-SLP is usually configured in the SIM card of the UE. Likewise, for a construction method for finding the domain name of the SLP, its basic information for constructing the domain name is also stored in the SIM card. Therefore, in certain cases (such as for a subscriber without a SIM card), the method described above can not assist the UE in obtain the address of the SLP.

In order to solve the problem existing when the UE finds the SLP, two methods are proposed in the present invention so as to satisfy requirements of the UE having no valid IMSI and SIM card which finds the SLP, and are applied in roaming and non-roaming scenarios of the UE.

FIG. 8 is a flowchart of a procedure in which the UE finds the SLP in the embodiment shown in FIG. 7. As shown in FIG. 8, the procedure in which an IP network returns the domain name or address of the SLP within the network through an attach response message to the UE when the UE attaches to the IP network comprises the following step.

In step 800, the UE sends an attach request to the IP network.

In step 801, upon success of the attachment, the IP network returns an attach accept message carrying the domain name or IP address of the SLP of the network. The SLP may be a SLP used for normal location (if the UE is in a non-roaming state, an H-SLP is returned, if the UE roams, a V-SLP is returned), or an E-SLP used for emergency location.

If the UE obtains the domain name of the SLP in the attach response, step 802 where the UE sends a DNS request to a DNS server to request the DNS server to parse the domain name is executed.

In step 803, the DNS server returns a DNS response to the UE to return the parsed IP address.

FIG. 9 is a flowchart of another procedure in which the UE finds the SLP in the embodiment shown in FIG. 7. As shown in FIG. 9, the procedure in which the UE obtains information of the SLP from a DHCP server comprises the following step.

In step 900, the UE sends an attach request to the IP access network.

In step 901, upon success of the attachment, the network allocates resources, such as IP address, to the UE, and returns an attach response, usually along with the address of the DHCP server.

In step 902, the UE sends a DHCP query request to the DHCP server to obtain some necessary network information.

In step 903, the DHCP server returns a DHCP query response carrying the domain name or IP address of the SLP of the network, or returns the domain name or IP address of the SLP of the network to the UE through a DHCP broadcast message.

If the DHCP server returns the domain name of the SLP in step 903, step 904 where the UE sends a DNS query request to the DNS server to request the DNS server to parse the domain name is executed.

In step 905, the DNS server returns a DNS response carrying the IP address parsed based on the domain name of the SLP.

It can be seen from the procedure in which the UE finds the SLP shown in FIG. 8 or 9 that the present invent effectively solves the problem of establishing an emergency location procedure upon initiation of an emergency call in the case that the network uses SUPL as a location technique and a UE has no valid IMSI or SIM card, to ensure successful implementation of the emergency call.

The above description is only the preferred embodiments of the present invention and is not intended to limit the present invention. Any modification, equivalent substitution and improvement made within the principle of the present invention as defined in the claims should be covered in the protection scope of the appended claims of the present invention.

## Claims

1. A method for implementing emergency location, comprising:
after a User Equipment, UE, initiating (702) an emergency call by sending an emergency call request to an emergency call session control function, E-CSCF, the UE immediately initiating (703-704) a SUPL position procedure by sending a location start request to a security user plane location platform, SLP; or before the UE initiating (702) the emergency call request by sending the emergency call request to the E-CSCF, the UE firstly initiating (703-704) the SUPL position procedure by sending the location start request to the SLP;
the SLP obtaining (705-706) location information of the UE through the SUPL position procedure;
after receiving the emergency call request from the UE, the E-CSCF sending (707) a location query request to a location request function, LRF;
the SLP associating the SUPL position procedure initiated by the UE with the location query request from the LRF;
when the SLP receives the location query request from the LRF but the SUPL position procedure initiated by the UE has not ended yet, the SLP providing (708) the location information of the UE to the LRF after the SUPL position procedure ends; or when the LRF queries the location information of the UE from the SLP, if the SUPL position procedure has ended, the SLP directly providing (708) the obtained location information of the UE to the LRF.

2. The method according to claim 1,
wherein an emergency identifier is contained in the location start request from the UE to the SLP;
the UE initiating (703-704) the location start request to the SLP specifically comprises:
the UE sending (703) a SUPL start message carrying the emergency identifier to the SLP; and
after receiving the SUPL start message from the UE, the SLP returning (704) a SUPL response message to the UE.

3. The method according to claim 1 or 2, wherein the SLP obtaining (705-706) the location information of the UE through the SUPL position procedure comprises:
the UE initiating (705) a SUPL initialization message to the SLP, and the SLP obtaining (706) the location information of the UE from the UE after a SUPL connection between the UE and the SLP is established.

4. The method according to claim 1, wherein the association information includes an identifier of the UE, and/or an IP address of the UE.

5. The method according to claim 1, further comprising the UE obtaining (700-701) an address of the SLP of a visited network from a network, and specifically comprising:
the UE sending (700) an attach request to an access network; upon success of the attachment, the access network returning a attach response message carrying a domain name or an IP address of the SLP of the network; and
if the UE obtains the domain name of the SLP in the attach response, the UE requesting a DNS server to parse the domain name; the DNS server returns the parsed IP address of the SLP to the UE.

6. The method according to claim 1, further comprising: the UE obtaining (700-701) an address of the SLP of a visited network from a network, and specifically comprising:
the UE sending (700) an attach request to an access network; upon success of attachment, the network allocating an IP address to the UE, and returning a attach response carrying an address of a DHCP server; the UE sending a DHCP query request to the DHCP server, the DHCP server returning a DHCP query response carrying a domain name or an IP address of the SLP of the network; or the DHCP server returning the domain name or the IP address of the SLP of the network to the UE through a DHCP broadcast message; and
if the DHCP server returns the domain name of the SLP, the UE requesting the DNCP server to parse the domain name; the DNS server returning the parsed IP address of the SLP to the UE.

7. A system for implementing emergency location comprising at least a UE, a SLP, a LRF and an E-CSCF, wherein
the UE is configured to initiate an emergency call by sending an emergency call request to the E-CSCF, and then initiate a SUPL position procedure by sending a location start request to the SLP; or firstly initiate a SUPL position procedure by sending the location start request to the SLP, and then initiate the emergency call request by sending the emergency call request to the E-CSCF;
the E-CSCF is configured to receive the emergency call request sent by the UE; and
the SLP is configured to obtain location information of the UE through the SUPL position procedure, and provide the location information of the UE to the LRF;
the E-CSCF is further configured to send a location query request to the LRF after receiving the emergency call request from the UE;
the SLP is configured to provide the location information of the UE to the LRF by:
associating the SUPL position procedure initiated by the UE with the location query request from the LRF; and
when the SLP receives the location query request from the LRF but the SUPL position procedure initiated by the UE has not ended yet, the SLP providing the location information of the UE to the LRF after the SUPL position procedure ends; or when the LRF queries the location information of the UE from the SLP, if the SUPL position procedure has ended, the SLP directly providing the obtained location information of the UE to the LRF.

8. The system according to claim 7, wherein
the E-CSCF is further configured to obtain a suitable PSAP, and route the emergency call sent by the UE to the PSAP after obtaining the PSAP; and
the LRF is further configured to determine the suitable PSAP based on the obtained location information, and return a position query response carrying the location information of the UE and information of the PSAP to the E-CSCF.

9. The system according to claim 7 or 8, wherein the UE is further configured to send a SUPL start message carrying an emergency identifier to the SLP to initiate the SUPL position procedure, and initiate a SUPL initialization message to the SLP to establish a SUPL connection between the UE and the SLP; and
the SLP is further configured to return a SUPL response message to the UE after receiving the SUPL start message from the UE, and obtain the location message from the UE after the SUPL connection between the UE and the SLP is established.

## Patentansprüche

1. Verfahren zum Realisieren einer Notfallortsbestimmung, das umfasst, dass:
nachdem ein Benutzergerät, UE, einen Notruf durch Senden einer Notrufanforderung an eine Notrufsitzungssteuerfunktion, E-CSCF, initiiert hat (702), das UE unmittelbar eine SUPL-Positionsprozedur durch Senden einer Ortsbestimmungsstartanforderung an eine Sicherheitsbenutzerebenenortsbestimmungsplattform, SLP, initiiert (703 - 704); oder bevor das UE die Notrufanforderung durch Senden der Notrufanforderung an die E-CSCF initiiert (702), das UE zuerst die SUPL-Positionsprozedur durch Senden der Ortsbestimmungsstartanforderung an die SLP initiiert (703 - 704);
die SLP eine Ortsbestimmungsinformation des UE über die SUPL-Positionsprozedur erhält (705 - 706);
die E-CSCF nach dem Empfangen der Notrufanforderung von dem UE eine Ortsbestimmungsanfrageanforderung an eine Ortsbestimmungsanforderungsfunktion, LRF, sendet (707);
die SLP die durch das UE initiierte SUPL-Positionsprozedur mit der Ortsbestimmungsanfrageanforderung von der LRF in Verbindung bringt;
wenn die SLP die Ortsbestimmungsanfrageanforderung von der LRF empfängt, jedoch die durch das UE initiierte SUPL-Positionsprozedur noch nicht beendet wurde, die SLP die Ortsbestimmungsinformation des UE der LRF bereitstellt (708), nachdem die SUPL-Positionsprozedur geendet hat; oder
wenn die LRF die Ortsbestimmungsinformation des UE von der SLP anfragt, wenn die SUPL-Positionsprozedur beendet ist, die SLP die erhaltene Ortsbestimmungsinformation des UE direkt der LRF bereitstellt (708).

2. Verfahren nach Anspruch 1,
wobei ein Notfallidentifikator in der Ortsbestimmungsstartanforderung von dem UE an die SLP enthalten ist;
das Initiieren (703 - 704) der Ortsbestimmungsstartanforderung an die SLP durch das UE im Speziellen umfasst, dass:
das UE eine SUPL-Startnachricht, die den Notfallidentifikator mitführt, an die SLP sendet (703); und
die SLP nach dem Empfangen der SUPL-Startnachricht von dem UE eine SUPL-Antwortnachricht an das UE zurücksendet (704).

3. Verfahren nach Anspruch 1 oder 2,
wobei das Erhalten (705 - 706) der Ortsbestimmungsinformation des UE durch die SLP über die SUPL-Positionsprozedur umfasst, dass:
das UE eine SUPL-Initialisierungsnachricht für die SLP initiiert (705), und
die SLP die Ortsbestimmungsinformation des UE von dem UE erhält (706), nachdem eine SUPL-Verbindung zwischen dem UE und der SLP hergestellt wurde.

4. Verfahren nach Anspruch 1,
wobei die Information des Inverbindungbringens einen Identifikator des UE und/oder eine IP-Adresse des UE umfasst.

5. Verfahren nach Anspruch 1,
das ferner umfasst, dass das UE eine Adresse der SLP eines besuchten Netzes von einem Netz erhält (700 - 701), und im Speziellen umfasst, dass:
das UE eine Anschlussanforderung an ein Zugangsnetz sendet (700); das Zugangsnetz bei einem Erfolg des Anschlusses eine Anschlussantwortnachricht zurücksendet, die einen Domainnamen oder eine IP-Adresse der SLP des Netzes mitführt; und
wenn das UE den Domainnamen der SLP in der Anschlussantwort erhält,
das UE einen DNS-Server auffordert, den Domainnamen zu parsen; der DNS-Server die geparste IP-Adresse der SLP an das UE zurücksendet.

6. Verfahren nach Anspruch 1,
das ferner umfasst, dass: das UE eine Adresse der SLP eines besuchten Netzes von einem Netz erhält (700 - 701), und im Speziellen umfasst, dass:
das UE eine Anschlussanforderung an ein Zugangsnetz sendet (700); bei einem Erfolg eines Anschlusses das Netz dem UE eine IP-Adresse zuteilt und eine Anschlussantwort zurücksendet, die eine Adresse eines DHCP-Servers mitführt; das UE eine DHCP-Anfrageanforderung an den DHCP-Server sendet, wobei der DHCP-Server eine DHCP-Anfrageantwort zurücksendet, die einen Domainnamen oder eine IP-Adresse der SLP des Netzes mitführt; oder der DHCP-Server den Domainnamen oder die IP-Adresse der SLP des Netzes über eine DHCP-Rundsendungsnachricht an das UE zurücksendet; und
wenn der DHCP-Server den Domainnamen der SLP zurücksendet, das UE den DNCP-Server auffordert, den Domainnamen zu parsen; der DNS-Server die geparste IP-Adresse der SLP an das UE zurücksendet.

7. System zum Realisieren einer Notfallortsbestimmung, das zumindest ein UE, eine SLP, eine LRF und eine E-CSCF umfasst, wobei
das UE ausgestaltet ist, um durch Senden einer Notrufanforderung an die E-CSCF einen Notruf zu initiieren, und dann durch Senden einer Ortsbestimmungsstartanforderung an die SLP eine SUPL-Positionsprozedur zu initiieren; oder zuerst durch Senden der Ortsbestimmungsstartanforderung an die SLP eine SUPL-Positionsprozedur zu initiieren und dann durch Senden der Notrufanforderung an die E-CSCF die Notrufanforderung zu initiieren;
die E-CSCF ausgestaltet ist, um die durch das UE gesendete Notrufanforderung zu empfangen; und
die SLP ausgestaltet ist, um eine Ortsbestimmungsinformation des UE über die SUPL-Positionsprozedur zu erhalten und die Ortsbestimmungsinformation des UE der LRF bereitzustellen;
die E-CSCF ferner ausgestaltet ist, um nach dem Empfangen der Notrufanforderung von dem UE eine Ortsbestimmungsanfrageanforderung an die LRF zu senden;
die SLP ausgestaltet ist, um die Ortsbestimmungsinformation des UE der LRF bereitzustellen, indem:
die SUPL-Positionsprozedur, die durch das UE initiiert wird, mit der Ortsbestimmungsanfrageanforderung von der LRF in Verbindung gebracht wird; und
wenn die SLP die Ortsbestimmungsanfrageanforderung von der LRF empfängt, jedoch die durch das UE initiierte SUPL-Positionsprozedur noch nicht beendet wurde, die SLP die Ortsbestimmungsinformation des UE der LRF bereitstellt, nachdem die SUPL-Positionsprozedur geendet hat; oder wenn die LRF die Ortsbestimmungsinformation des UE von der SLP anfragt,
wenn die SUPL-Positionsprozedur beendet ist, die SLP die erhaltene Ortsbestimmungsinformation des UE direkt der LRF bereitstellt.

8. System nach Anspruch 7, wobei
die E-CSCF ferner ausgestaltet ist, um einen geeigneten PSAP zu erhalten und den Notruf, der durch das UE gesendet wird, nach dem Erhalten des PSAP an den PSAP weiterzuleiten; und
die LRF ferner ausgestaltet ist, um basierend auf der erhaltenen Ortsbestimmungsinformation den geeigneten PSAP zu ermitteln und eine Positionsanfrageantwort, die die Ortsbestimmungsinformation des UE und eine Information des PSAP mitführt, an die E-CSCF zurückzusenden.

9. System nach Anspruch 7 oder 8,
wobei das UE ferner ausgestaltet ist, um eine SUPL-Startnachricht, die einen Notfallidentifikator mitführt, an die SLP zu senden, um die SUPL-Positionsprozedur zu initiieren, und eine SUPL-Initialisierungsnachricht für die SLP zu initiieren, um eine SUPL-Verbindung zwischen dem UE und der SLP herzustellen; und
die SLP ferner ausgestaltet ist, um eine SUPL-Antwortnachricht an das UE zurückzusenden, nachdem die SUPL-Startnachricht von dem UE empfangen wurde, und die Ortsbestimmungsnachricht von dem UE zu erhalten, nachdem die SUPL-Verbindung zwischen dem UE und der SLP hergestellt wurde.

## Revendications

1. Procédé de réalisation d'une localisation de secours, comprenant les étapes consistant à :
après qu'un équipement d'utilisateur a lancé (702) un appel de secours en envoyant une demande d'appel de secours à une fonction de commande de session d'appel de secours, E-CSCF pour « *Emergency Call Session Control Function* », lancer (703 et 704) immédiatement par l'équipement d'utilisateur une procédure de localisation SUPL en envoyant une demande de début de localisation à une plate-forme de localisation de sécurité du sous-système de l'utilisateur, SLP pour *« Security Location Platform » ;* ou bien, avant que l'équipement d'utilisateur lance (702) la demande d'appel de secours en envoyant la demande d'appel de secours à la fonction E-CSCF, lancer (703 et 704) tout d'abord par l'équipement d'utilisateur la procédure de localisation SUPL en envoyant la demande de début de localisation à la plate-forme SLP ;
obtenir (705 et 706) par la plate-forme SLP des informations de position de l'équipement d'utilisateur à l'aide de la procédure de localisation SUPL ;
après réception de la demande d'appel de secours provenant de l'équipement d'utilisateur, envoyer (707) par la fonction E-CSCF une demande d'interrogation de position à une fonction de demande de localisation, LRF pour « *Location Request Function » ;*
associer par la plate-forme SLP la procédure de localisation SUPL lancée par l'équipement d'utilisateur et la demande d'interrogation de position provenant de la fonction LRF ;
lorsque la plate-forme SLP reçoit la demande d'interrogation de position de la fonction LRF alors que la procédure de localisation SUPL lancée par l'équipement d'utilisateur n'est pas encore terminée, fournir (708) par la plate-forme SLP les information de position de l'équipement d'utilisateur à la fonction LRF après que la procédure de localisation SUPL s'est achevée ; ou lorsque la fonction LRF demande les informations de position de l'équipement d'utilisateur à la plate-forme SLP, si la procédure de localisation SUPL est achevée, fournir (708) directement par la plate-forme SLP à la fonction LRF les informations de position de l'équipement d'utilisateur qui ont été obtenues.

2. Procédé selon la revendication 1, dans lequel :
un identificateur de secours est contenu dans la demande de début de localisation adressée par l'équipement d'utilisateur à la plate-forme SLP ;
l'étape de lancement (703 et 704) de la demande de début de localisation par l'équipement d'utilisateur comprend spécifiquement les étapes consistant à :
envoyer (703) à la plate-forme SLP par l'équipement d'utilisateur un message de début SUPL comprenant l'identificateur de secours ; et
après réception du message de début SUPL provenant de l'équipement d'utilisateur, renvoyer (704) un message de réponse SUPL à l'équipement d'utilisateur par la plate-forme SLP.

3. Procédé selon la revendication 1 ou 2, dans lequel l'étape (705 et 706) d'obtention des informations de position de l'équipement d'utilisateur par la plate-forme SLP grâce à la procédure de localisation SUPL comprend les étapes consistant à :
envoyer (705) par l'équipement d'utilisateur un message d'initialisation SUPL à la plate-forme SLP et obtenir (706) les informations de position de l'équipement d'utilisateur par la plate-forme SLP auprès de l'équipement d'utilisateur après qu'une connexion SUPL a été établie entre l'équipement d'utilisateur et la plate-forme SLP.

4. Procédé selon la revendication 1, dans lequel les informations d'association comprennent un identificateur de l'équipement d'utilisateur et/ou une adresse IP de l'équipement d'utilisateur.

5. Procédé selon la revendication 1, comprenant en outre l'étape consistant à obtenir (700 et 701) par l'équipement d'utilisateur auprès d'un réseau une adresse de la plate-forme SLP d'un réseau visité et comprenant spécifiquement les étapes consistant à :
envoyer (700) par l'équipement d'utilisateur une demande de rattachement à un réseau d'accès ; en cas de succès du rattachement, renvoyer par le réseau d'accès un message de réponse de rattachement comportant un nom de domaine ou une adresse IP de la plate-forme SLP du réseau ; et
si l'équipement d'utilisateur obtient le nom de domaine de la plate-forme SLP dans la réponse de rattachement, demander par l'équipement d'utilisateur à un serveur DNS d'analyser le nom de domaine et renvoyer à l'équipement d'utilisateur par le serveur DNS l'adresse IP analysée de la plate-forme SLP.

6. Procédé selon la revendication 1, comprenant en outre l'étape consistant à obtenir (700 et 701) par l'équipement d'utilisateur auprès d'un réseau une adresse de la plate-forme SLP d'un réseau visité et comprenant spécifiquement les étapes consistant à :
envoyer (700) par l'équipement d'utilisateur une demande de rattachement à un réseau d'accès ; en cas de succès du rattachement, attribuer une adresse IP à l'équipement d'utilisateur par le réseau et renvoyer un message de réponse de rattachement comportant une adresse d'un serveur DHCP ; envoyer une demande d'interrogation DHCP au serveur DHCP par l'équipement d'utilisateur ; renvoyer par le serveur DHCP une demande d'interrogation DHCP comportant un nom de domaine ou une adresse IP de la plate-forme SLP du réseau ; ou renvoyer le nom de domaine ou l'adresse IP de la plate-forme SLP du réseau à l'équipement d'utilisateur par le serveur DHCP dans un message DHCP à diffusion générale ; et
si le serveur DHCP renvoie le nom de domaine de la plate-forme SLP, demander au serveur DHCP par l'équipement d'utilisateur d'analyser le nom de domaine et renvoyer à l'équipement d'utilisateur par le serveur DNS l'adresse IP analysée de la plate-forme SLP.

7. Système destiné à mettre en oeuvre une localisation de secours, comprenant au moins un équipement d'utilisateur, une plate-forme SLP, une fonction LRF et une fonction E-CSCF, dans lequel :
l'équipement d'utilisateur est configuré pour lancer un appel de secours en envoyant une demande d'appel de secours à la fonction E-CSCF puis pour lancer une procédure de localisation SUPL en envoyant une demande de début de localisation à la plate-forme SLP ; ou bien, pour lancer tout d'abord la procédure de localisation SUPL en envoyant la demande de début de localisation à la plate-forme SLP puis pour lancer la demande d'appel de secours en envoyant la demande d'appel de secours à la fonction E-CSCF ;
la fonction E-CSCF est configurée pour recevoir la demande d'appel de secours envoyée par l'équipement d'utilisateur ; et
la plate-forme SLP est configurée pour obtenir des informations de position de l'équipement d'utilisateur à l'aide de la procédure de localisation SUPL et pour fournir les informations de position de l'équipement d'utilisateur à la fonction LRF ;
la fonction E-CSCF est en outre configurée pour envoyer une demande d'interrogation de position à la fonction LRF après avoir reçu la demande d'appel de secours provenant de l'équipement d'utilisateur ;
la plate-forme SLP est configurée pour fournir les informations de position de l'équipement d'utilisateur à la fonction LRF en exécutant les étapes consistant à :
associer la procédure de localisation SUPL lancée par l'équipement d'utilisateur et la demande d'interrogation de position provenant de la fonction LRF ; et
lorsque la plate-forme SLP reçoit la demande d'interrogation de position de la fonction LRF alors que la procédure de localisation SUPL lancée par l'équipement d'utilisateur n'est pas encore terminée, fournir par la plate-forme SLP les information de position de l'équipement d'utilisateur à la fonction LRF après que la procédure de localisation SUPL s'est achevée ; ou lorsque la fonction LRF demande les informations de position de l'équipement d'utilisateur à la plate-forme SLP, si la procédure de localisation SUPL est achevée, fournir directement par la plate-forme SLP à la fonction LRF les informations de position de l'équipement d'utilisateur qui ont été obtenues.

8. Système selon la revendication 7, dans lequel :
la fonction E-CSCF est en outre configurée pour obtenir un point PSAP adéquat et pour router l'appel de secours envoyé par l'équipement d'utilisateur vers le point PSAP après avoir obtenu le point PSAP ; et
la fonction LRF est en outre configurée pour obtenir le point PSAP adéquat en fonction des informations de position obtenues et pour renvoyer une réponse d'interrogation de position comprenant les informations de position de l'équipement d'utilisateur et des informations sur le point PSAP à la fonction E-CSCF.

9. Système selon la revendication 7 ou 8, dans lequel l'équipement d'utilisateur est en outre configuré pour envoyer un message de début SUPL comportant un identificateur de secours à la plate-forme SPL pour lancer la procédure de localisation SUPL et pour envoyer un message d'initialisation SUPL à la plate-forme SLP pour établir une connexion SUPL entre l'équipement d'utilisateur et la plate-forme SLP ; et
la plate-forme SLP est en outre configurée pour renvoyer un message de réponse SUPL à l'équipement d'utilisateur après réception du message de début SUPL en provenance de l'équipement d'utilisateur et pour obtenir le message de localisation de l'équipement d'utilisateur après que la connexion SUPL a été établie entre l'équipement d'utilisateur et la plate-forme SLP.
